# EUROPEAN PATENT APPLICATION

(11) **EP 4 738 512 A1**
(43) Date of publication of application: **06.05.2026**
(21) Application number: 25213065.3
(22) Date of filing: 03.11.2025
(51) Int. Cl.: H01M 10/0562, H01M 4/62, H01M 4/02

(54) **SOLID ELECTROLYTE, POSITIVE ELECTRODE INCLUDING THE SAME, AND METHOD OF MANUFACTURING THE SAME**

(30) Priority: 05.11.2024 KR 20240155280
(71) Applicant: SAMSUNG SDI CO., LTD., Yongin-si, Gyeonggi-do 17084 (KR)
(72) Inventor: KIM, Hanseul, Yongin-si, Gyeonggi-do 17084 (KR); AN, Seonhyeok, Yongin-si, Gyeonggi-do 17084 (KR); KIM, Dongsu, Yongin-si, Gyeonggi-do 17084 (KR)
(74) Representative: Michalski Hüttermann & Partner Patentanwälte mbB

(57) **Abstract**

Disclosed are solid electrolytes, positive electrodes, and methods of manufacturing the solid electrolytes. The solid electrolyte includes a cluster that includes an active material particle and solid electrolyte particles. The solid electrolyte particles are in contact with the active material particle. Each of the solid electrolyte particles includes a linear carbon-based conductive material dispersed in the solid electrolyte particle. The active material particle of the cluster is electrically connected to a first solid electrolyte particle among the solid electrolyte particles. A second solid electrolyte particle among the solid electrolyte particles and the first solid electrolyte particle are in contact with each other to form an electrical path through the linear carbon-based conductive material of the first solid electrolyte particle and the linear carbon-based conductive material of the second solid electrolyte particle.

## Description

### CROSS-REFERENCE TO RELATED APPLICATION

This application claims priority under 35 U.S.C 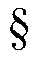 119 to Korean Patent Application No. 10-2024-0155280 filed on November 5, 2024 in the Korean Intellectual Property Office, the disclosure of which is hereby incorporated by reference in its entirety.

### BACKGROUND

Examples of the present disclosure relate to an all-solid-state battery.

There is increasing development of high-energy density and safe batteries driven by industrial demands. For example, lithium ion batteries are commercialized not only in formation-related and communication devices, but also in the automotive industry. In the automotive industry, safety is emphasized due to its direct relation to the safety of human lives.

An all-solid-state battery typically includes a solid electrolyte in place of a liquid electrolyte. As an all-solid-state battery does not use a flammable organic dispersion medium, the possibility of fire or explosion may be significantly reduced, even in the event of short-circuit. Therefore, an all-solid-state battery may have high stability.

### SUMMARY

An example embodiment of the present disclosure provides a solid electrolyte in which a conductive material is dispersed inside a particle to improve electronic conductivity and ionic conductivity of a positive electrode.

An example embodiment of the present disclosure provides a positive electrode in which particles are uniformly mixed to improve electrode performance.

According to an example embodiment of the present disclosure, a positive electrode for an all-solid-state battery may include a cluster that includes an active material particle and a plurality of solid electrolyte particles. The plurality of solid electrolyte particles may be in contact with the active material particle. Each of the plurality of solid electrolyte particles may include a linear carbon-based conductive material dispersed in the solid electrolyte particle. The active material particle of the cluster may be electrically connected to a first solid electrolyte particle among the plurality of solid electrolyte particles. A second solid electrolyte particle among the plurality of solid electrolyte particles and the first solid electrolyte particle may be in contact with each other to form an electrical path through the linear carbon-based conductive material of the first solid electrolyte particle and the linear carbon-based conductive material of the second solid electrolyte particle.

According to an example embodiment of the present disclosure, an all-solid-state battery may include a positive electrode that includes a positive electrode current collector and a positive electrode active material layer on the positive electrode current collector; a solid electrolyte layer; and a negative electrode. The positive electrode active material layer may include a positive electrode active material particle and a first solid electrolyte particle. The first solid electrolyte particle may include a linear carbon-based conductive material dispersed in the first solid electrolyte particle. The linear carbon-based conductive material may be configured to penetrate the first solid electrolyte particle to form an electrical path between a first location and a second location on a surface of the first solid electrolyte particle.

According to an example embodiment of the present disclosure, a method of manufacturing a solid electrolyte may include mixing an electrolyte precursor and a linear carbon-based conductive material to obtain a mixture; and thermally treating the mixture to prepare a solid electrolyte particle. The linear carbon-based conductive material may be configured to penetrate the solid electrolyte particle to form an electrical path between a first location and a second location on a surface of the solid electrolyte particle.

### BRIEF DESCRIPTION OF DRAWINGS

FIG. 1 illustrates a plan view showing an all-solid-state battery, according to an example embodiment of the present disclosure.
FIG. 2 illustrates a cross-sectional view taken along line A-A' of FIG. 1.
FIG. 3 illustrates an enlarged cross-sectional view of section "M" depicted in FIG. 2, showing a positive electrode active material layer according to an example embodiment of the present disclosure.
FIG. 4 illustrates a diagram showing a cluster according to an example embodiment of the present disclosure.
FIG. 5 illustrates a diagram showing a solid electrolyte particle according to an example embodiment of the present disclosure.
FIG. 6 illustrates an enlarged view showing a positive electrode active material layer according to an example embodiment of the present disclosure.
FIG. 7 illustrates a cross-sectional view showing an all-solid-state battery according to an example embodiment of the present disclosure.
FIG. 8 illustrates a cross-sectional view showing an all-solid-state battery according to an example embodiment of the present disclosure.
FIG. 9 illustrates a cross-sectional view showing an all-solid-state battery according to an example embodiment of the present disclosure.
FIG. 10 is a flow chart illustrating a method of manufacturing a solid electrolyte, according an example embodiment of the present disclosure.

### DETAILED DESCRIPTION OF EMBODIMENTS

As the following described example inventive concept allows for various changes and numerous example embodiments, particular embodiments are illustrated in the drawings and described in detail in the written description. However, there is no intent to limit the disclosure to the particular forms disclosed, but on the contrary, the disclosure is to cover any or all modifications, equivalents, and alternatives falling within the spirit and scope of the disclosure.

The terms used in the present specification are merely used to describe particular example embodiments, and are not intended to limit the present disclosure. An expression used in the singular encompasses the expression of the plural, unless it has a clearly different meaning in the context. Hereinafter, it is to be understood that the terms such as "including" or "having" are intended to indicate the existence of features, numbers, operations, components, parts, elements, materials, or combinations thereof disclosed in the specification, and are not intended to preclude the possibility that one or more other features, numbers, operations, components, parts, elements, materials, or combinations thereof may exist or may be added. The "/", as used herein, may be interpreted as either "and" or "or".

Unless otherwise especially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

In the drawings, thicknesses of layers and regions may be enlarged or reduced for clarity. Throughout the specification, like reference numerals denote like elements. Throughout the specification, it is understood that when one element, such as layer, region, or plate, is referred to as being "on" another element, the element can be directly on the other element, or intervening elements may be present therebetween. It is understood that, although the terms first, second, etc. may be used herein to describe various components, these components should not be limited by these terms. In the present specification and drawings, components having substantially the same functional features are denoted by the same reference numerals, and redundant descriptions are omitted for conciseness.

In this disclosure, a "size" of particles refers to, for example, a "particle diameter" of particles. The term "particle diameter" refers to an average diameter when particles are spherical and refers to an average major axis length when particles are non-spherical. A particle diameter may be measured using a particle size analyzer (PSA). A "particle diameter" is, for example, an average particle diameter. An average particle diameter refers to, for example, a median particle diameter (D₅₀). The median particle diameter (D₅₀) is a particle size corresponding to a 50% cumulative volume when a particle size distribution measure through a laser diffraction method is calculated from particles having a smaller particle size.

In this description, the term "metal" includes metals or metalloids, such as silicon and germanium, in an elemental or ionic state.

In this description, the term "alloy" refers to a mixture of two or more metals.

In this description, the term "positive electrode active material" refers to a positive electrode material capable of undergoing lithiation and delithiation.

In this description, the term "negative electrode active material" refers to a negative electrode material capable of undergoing lithiation and delithiation.

In this description, the terms "lithiation" and "to lithiate" refer to a process of adding lithium to a positive electrode active material or a negative electrode active material.

In this description, the terms "delithiation" and "to delithiate" refer to a process of removing lithium from a positive electrode active material or a negative electrode active material.

In this description, the terms "charge" and "to charge" refer to a process of providing electrochemical energy to a battery.

In this description, the terms "positive electrode" and "cathode" refer to an electrode in which electrochemical reduction and lithiation occur during a discharge process.

In this description, the terms "negative electrode" and "anode" refer to an electrode in which electrochemical oxidation and delithiation occur during a discharge process.

The following description focuses on all-solid-state batteries and their fabrication methods according to some example embodiments of the present disclosure.

When the terms "about" or "substantially" are used in this specification in connection with a numerical value, it is intended that the associated numerical value include a tolerance of ±10% around the stated numerical value. The expression "up to" includes amounts of zero to the expressed upper limit and all values therebetween. When ranges are specified, the range includes all values therebetween such as increments of 0.1%.

### All-Solid-State Battery

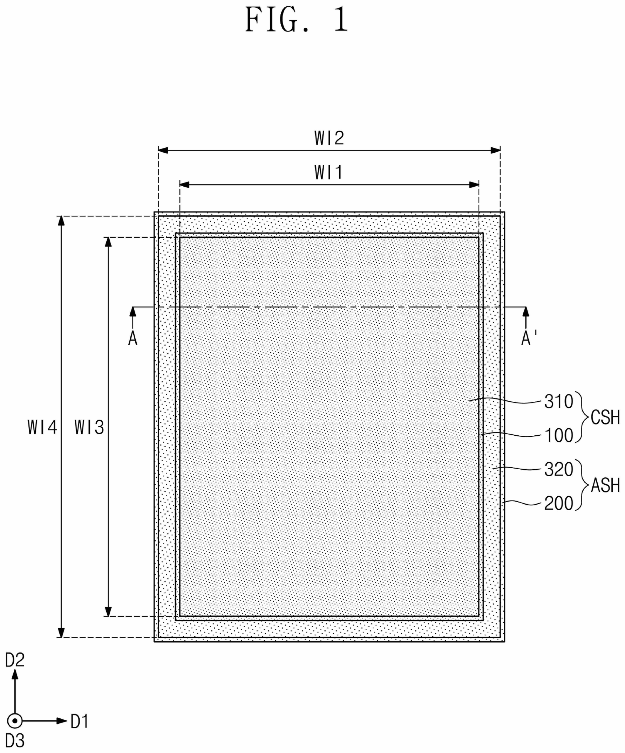

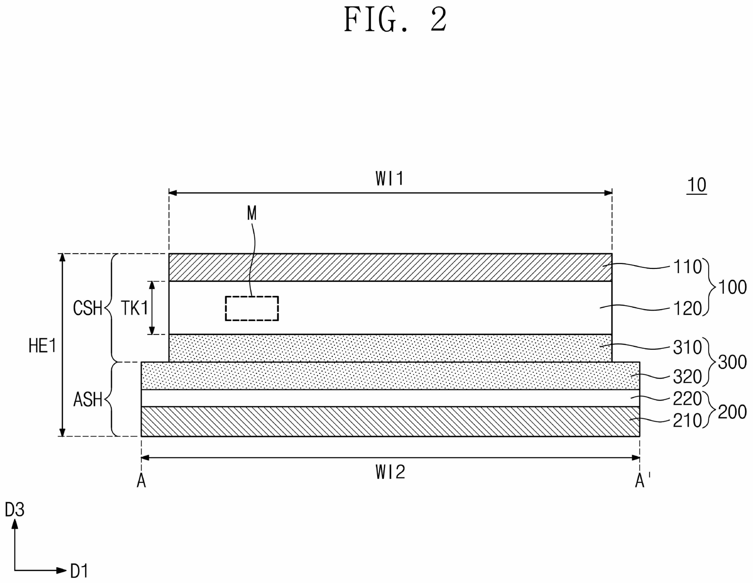

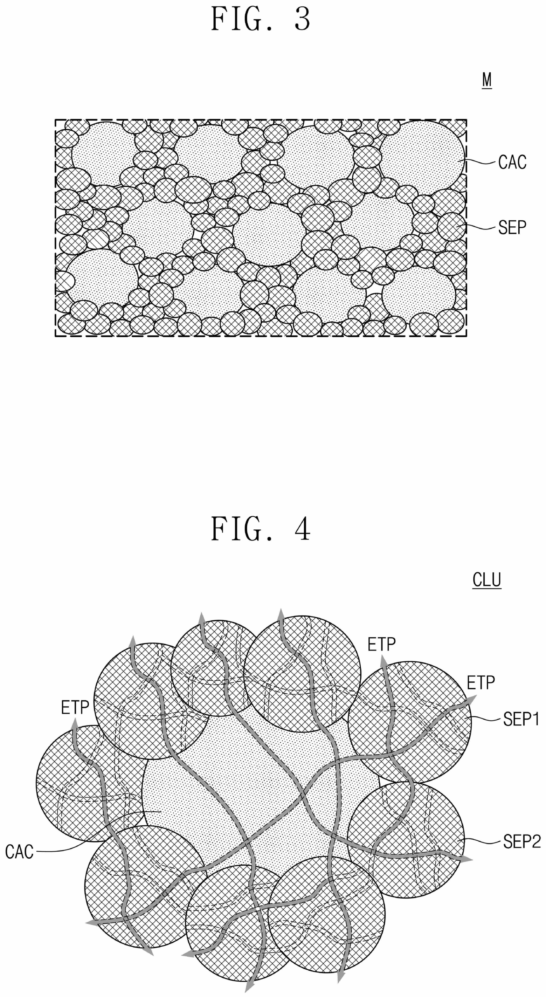

FIG. 1 illustrates a plan view showing an all-solid-state battery according to an example embodiment of the present disclosure. FIG. 2 illustrates a cross-sectional view taken along line A-A' of FIG. 1. FIG. 3 illustrates an enlarged cross-sectional view of section "M" depicted in FIG. 2, showing a positive electrode active material layer according to an example embodiment of the present disclosure.

Referring to FIGS. 1 and 2, an all-solid-state battery 10 according to examples of the present disclosure may include a positive electrode 100, a negative electrode 200 opposite to the positive electrode 100, and a solid electrolyte layer 300 between the positive electrode 100 and the negative electrode 200. The present disclosure, however, is not limited thereto, and the all-solid-state battery 10 may further include an additional functional layer, or more layers, such as, e.g., an adhesion enhancement layer, between the positive electrode 100 and the solid electrolyte layer 300, or between the negative electrode 200 and the solid electrolyte layer 300.

### Positive Electrode

The positive electrode 100 according to an example embodiment may include a positive electrode current collector 110, and a positive electrode active material layer 120 on the positive electrode current collector 110. The positive electrode active material layer 120 may include a positive electrode active material. The positive electrode active material layer 120 may further include one or more of a solid electrolyte, a binder, and a conductive material.

The positive electrode current collector 110 may provide a reference surface on which the positive electrode active material layer 120 is disposed. The positive electrode current collector 110 may include, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive electrode current collector 110 may have a plate or foil shape. In an example embodiment of the present disclosure, the positive electrode current collector 110 may not be provided. The positive electrode current collector 110 may have a thickness ranging from, for example, ≥ 1 µm to ≤ 100 µm, ≥ 1 µm to ≤ 50 µm, ≥ 5 µm to ≤ 25 µm, or ≥ 10 µm to ≤ 20 µm.

The positive electrode current collector 110 may include, for example, a base film and a metal layer disposed on one side, or on opposite sides, of the base film. The base film may include, for example, a polymer. The polymer may be or include, for example, a thermoplastic polymer. The polymer may include, for example, at least one of polyethyleneterephthalate (PET), polyethylene (PE), polypropylene (PP), polybutyleneterephthalate (PBT), polyimide (PI), or a combination thereof.

The base film may be or include, for example, an insulator. As the base film includes a dielectric thermoplastic polymer, the base film may be softened or liquefied to hinder battery operation when short-circuit occurs, thereby reducing or suppressing a rapid increase in electric current.

The metal layer may include, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The metal layer may act as an electrochemical fuse, and thus may be disconnected in the event of over-current to provide a protection against short circuits. A thickness of the metal layer may be adjusted to control limit current and maximum current. The metal layer may be plated or deposited on the base film. As a reduction in thickness of the metal layer leads to a reduction in limit current and/or maximum current, it may be possible to improve stability of lithium batteries during short circuits.

The metal layer may be additionally provided thereon with a lead tab for external connection. The lead tab may be welded to the metal layer, or to a stack of the metal layer and the base film, by ultrasonic welding, laser welding, spot welding, and so forth. One or both of the base film and the metal layer may be melted such that the metal layer may be electrically connected to the lead tab.

The metal layer and the lead tab may be provided therebetween with a metal chip to achieve a robust welding between the metal layer and the lead tab. The metal chip may be a flake formed of the same material as the metal of the metal layer. The metal chip may be or include, for example, a metal foil or a metal mesh. The metal chip may be or include, for example, at least one of an aluminum foil, a copper foil, or a stainless steel (SUS) foil. As the metal chip is positioned on the metal layer and then welded to the lead tab, the lead tab may be welded to a stack of the metal chip and the metal layer, or to a stack of the metal chip, the metal layer, and the base film. One or more of the base film, the metal layer, and the metal chip may be melted during the welding, and thus the metal layer or a stack of the metal layer and the metal chip may be electrically connected to the lead tab. One or both of the metal chip and the lead tab may be added to a portion of the metal layer.

The base film may have a thickness ranging from, for example, ≥ 1 µm to ≤ 50 µm, ≥ 1.5 µm to ≤ 50 µm, ≥ 1.5 µm to ≤ 40 µm, or ≥ 1 µm to ≤ 30 µm. Because the base film has a thickness that is within the range above, it may be possible to effectively reduce a weight of an electrode assembly. A melting point of the base film may range from, for example, ≥ 100°C to ≤ 300°C, ≥ 100°C to ≤ 250°C, or ≥ 100°C to ≤ 200°C. Because the base film has a melting point that is within the range above, in the welding procedure of the lead tab, the base film may be melted and readily connected to the lead tab. To improve adhesion between the base film and the metal layer, a surface treatment, such as, e.g., corona treatment, may be performed on the base film.

The metal layer may have a thickness ranging from, for example, ≥ 0.01 µm to ≤ 3 µm, ≥ 0.1 µm to ≤ 3 µm, ≥ 0.1 µm to ≤ 2 µm, or ≥ 0.1 µm to ≤ 1 µm. As the metal layer has a thickness within the range above, stability of an electrode assembly may be secured while maintaining conductivity. The metal chip may have a thickness ranging from, for example, ≥ 2 µm to ≤ 10 µm, ≥ 2 µm to ≤ 7 µm, or ≥ 4 µm to ≤ 6 µm. As the metal chip has a thickness within the range above, a connection between the metal layer and the lead tab may readily be achieved. As the positive electrode current collector 110 has a structure in which the base film and the metal layer are stacked, it may be possible to reduce a weight of the positive electrode 100, and as a result, to improve an energy density of the all-solid-state battery 10.

### Positive Electrode Active Material

In an example embodiment of the present disclosure, the positive electrode active material in the positive electrode active material layer 120 may be present in an amount in a range of ≥ 10 wt% to ≤ 99 wt%, ≥ 30 wt% to ≤ 80 wt%, ≥ 40 wt% to ≤ 70 wt%, or ≥ 40 wt% to ≤ 50 wt% of the total weight of the positive electrode active material layer 120. When the positive electrode active material has an extremely or substantially small amount, the all-solid-state battery 10 may have a decreased energy density. When the positive electrode active material has a remarkably or substantially large amount, a volume of the positive electrode 100 may be changed to promote a degradation of the all-solid-state battery 10.

The positive electrode active material in the positive electrode active material layer 120 may reversibly absorb and desorb lithium ions. The positive electrode active material may include a plurality of particles. The positive electrode active material according to examples of the present disclosure may include at least one of an oxide-based positive electrode active material, a sulfide-based positive electrode active material, or a combination thereof.

The oxide-based positive electrode active material may include, for example, at least one of a lithium transition metal oxide, a metal oxide, or a combination thereof. The lithium transition metal oxide may include, for example, at least one of lithium cobalt oxide, lithium nickel oxide, lithium nickel cobalt oxide, lithium nickel cobalt aluminum oxide, Lithium nickel cobalt manganese oxide, lithium manganate, lithium iron phosphate, or a combination thereof. The lithium oxide may include, for example, at least one of iron oxide, vanadium oxide, or a combination thereof.

The sulfide-based positive electrode active material layer may include, for example, at least one of nickel sulfide, copper sulfide, Li₂S, Li₂S-containing composite, or a combination thereof. The sulfide-based positive electrode active material according to an example embodiment of the present disclosure is discussed in greater detail below.

The oxide-based positive electrode active material may include, for example, at least one kind of composite oxide including lithium and metal that is or includes at least one of cobalt, manganese, nickel, and a combination thereof. The lithium-containing oxide-based positive electrode active material may include a compound represented by one of chemical formulae LiₐA_{1-b}B'_{b}D₂ (where 0.90 ≤ a ≤ 1 and 0 ≤ b ≤ 0.5), LiₐE_{1-b}B'_{b}O_{2-c}Dₑ (where 0.90 ≤ a ≤ 1, 0 ≤ b ≤ 0.5, and 0 ≤ c ≤ 0.05), LiE_{2-b}B'_{b}O_{4-c}D_{c} (where 0 ≤ b ≤ 0.5 and 0 ≤ c ≤ 0.05), LiₐNi_{1-b-c}Co_{b}B'_{c}D_{α} (where 0.90 ≤ a ≤ 1, 0 ≤ b ≤ 0.5, 0 ≤ c ≤ 0.05, and 0< α ≤ 2), LiₐNi_{1-b-c}Co_{b}B'_{c}O_{2-α}F'_{α} (where 0.90 ≤ a ≤ 1, 0 ≤ b ≤ 0.5, 0 ≤ c ≤ 0.05, and 0< α <2), LiₐNi_{1-b-c}Mn_{b}B'_{c}D_{c}, (where 0.90 ≤ a ≤ 1, 0 ≤ b ≤ 0.5, 0::;; c ≤ 0.05, and 0< α ≤ 2), LiₐNi_{1-b-c}Mn_{b}B'_{c}O_{2-α}F'_{α} (where 0.90 ≤ a ≤ 1, 0 ≤ b ≤ 0.5, 0 ≤ c ≤ 0.05, and 0< α <2), LiₐNi_{b}E_{c}G_{d}O₂ (where 0.90 ≤ a ≤ 1, 0 ≤ b ≤ 0.9, 0 ≤ c ≤ 0.5, and 0.001 ≤ d ≤ 0.1), LiₐNi_{b}Co_{c}Mn_{d}GeO₂ (where 0.90 ≤ a ≤ 1, 0 ≤ b ≤ 0.9, 0 ≤ c ≤ 0.5, 0 ≤ d ≤ 0.5, and 0.001 ≤ e ≤ 0.1), LiₐNiG_{b}O₂ (where 0.9 ≤ a ≤ 1 and 0.001 ≤ b ≤ 0.1), LiₐCoG_{b}O₂ (where 0.90 ≤ a ≤ 1 and 0.001 ≤ b ≤ 0.1), LiₐMnG_{b}O₂ (where 0.90 ≤ a ≤ 1 and 0.001 ≤ b ≤ 0.1), LiₐMn₂G_{b}O₄ (where 0.90 ≤ a ≤ 1 and 0.001 ≤ b ≤ 0.1), LiV₂O₅, LiI'O₂, LiNiVO₄, Li_{(3-f)}J₂(PO₄)₃ (where 0 ≤ f ≤ 2), and Li_{(3-f)}Fe₂(PO₄)₃ (where 0 ≤ f ≤ 2), LiFePO₄.

In the compounds above, A may be or include at least one of Ni, Co, Mn, or a combination thereof, B' may be or include at least one of Al, Ni, Co, Mn, Cr, Fe, Mg, Sr, V, a rare-earth element, or a combination thereof, D may be or include at least one of O, F, S, P, or a combination thereof, E may be or include at least one of Co, Mn, or a combination thereof, F' may be or include at least one of F, S, P, or a combination thereof, G may be or include at least one of Al, Cr, Mn, Fe, Mg, La, Ce, Sr, V, or a combination thereof, I' may be or include at least one of Cr, V, Fe, Sc, Y, or a combination thereof, and J may be or include at least one of V, Cr, Mn, Co, Ni, Cu, or a combination thereof.

The oxide-based positive electrode active material may include, for example, a lithium salt of transition metal oxide having a layered rock salt type structure among the lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of cations and anions are arranged displaced from each other by 1/2 of a ridge of a unit lattice. The lithium transition metal oxide having the layered rock salt type structure may be or include a ternary lithium transition metal oxide, such as LiNiₓCo_{y}Al_{z}O₂ (NCA) or LiNiₓCo_{y}Mn_{z}O₂ (NCM) (where 0<x<1,0<y<1, 0<z<1, and x+y+z=1). When the positive electrode active material includes a ternary lithium transition metal oxide having the layered rock salt type structure, the all-solid-state battery 10 may have increased energy density and improved thermal stability.

The oxide-based positive electrode active material may be covered with a coating layer (not shown). The oxide-based positive electrode active material may be included in a mixture of the aforementioned compound and a compound to which the coating layer is added. The coating layer added to a surface of the positive electrode active material may include, for example, at least one of oxide, hydroxide, oxyhydroxide, oxycarbonate, or hydrocarbonate of a coating element discussed below. The compound that constitutes the coating layer may be amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, Li₂O-ZrO₂ (LZO). A method for forming the coating layer may be or include any methods that do not adversely affect physical characteristics of the positive electrode active material. The method of forming the coating layer may include, for example, spray coating or immersion.

When the oxide-based positive electrode active material includes nickel (Ni) as a ternary lithium transition metal oxide, such as NCA or NCM discussed above, a capacity density of the all-solid-state battery 10 may increase to reduce metal elution from the positive electrode active material in a charged state. Therefore, the all-solid-state battery 10 may improve in cycle characteristics in a charged state. The language "cycle characteristics" may refer to properties that indicate the degree to which the all-solid-state battery 10 is degraded due to charge and discharge. For example, the all-solid-state battery 10 with high cycle characteristics may degrade less due to charge and discharge, while the all-solid-state battery 10 with low cycle characteristics may degrade more due to charge and discharge.

The oxide-based positive electrode active material may have, for example, a spherical or oval particle shape. There is no limitation on a particle diameter and an amount of the oxide-based positive electrode active material. The oxide-based positive electrode active material may have a size of, for example, ≥ 0.1 µm to ≤ 30 µm, ≥ 0.5 µm to ≤ 20 µm, or ≥ 1 µm to ≤ 15 µm. The oxide-based positive electrode active material may be or include, for example, a monocrystalline particle or a polycrystalline particle.

The positive electrode active material layer 120 according to an example embodiment of the present disclosure may include a sulfide-based positive electrode active material. For example, the sulfide-based positive electrode active material may include a Li₂S-containing positive electrode active material. The Li₂S-containing positive electrode active material may include, for example, at least one of a composite of Li₂S and carbon, a composite of Li₂S, carbon, and a solid electrolyte, a composite of Li₂S and a solid electrolyte, a composite of Li₂S and lithium salt, a composite of Li₂S, lithium salt, and carbon, a composite of Li₂S, lithium salt, metal halide, and carbon, a composite of Li₂S and metal carbide, a composite of Li₂S, carbon, and metal carbide, a composite of Li₂S and metal nitride, a composite of Li₂S, carbon, and metal nitride, or a combination thereof.

### Solid Electrolyte

Referring to FIG. 3, the positive electrode active material layer 120 according to an example embodiment of the present disclosure may further include a solid electrolyte in addition to the positive electrode active material. The solid electrolyte may exhibit lithium ionic conductivity, and may be or include a medium by which lithium ions are transferred from the positive electrode active material in the positive electrode 100. The positive electrode active material and the solid electrolyte may be present as individual particles. For example, the positive electrode active material layer 120 may include positive electrode active material particles CAC and solid electrolyte particles SEP.

When an ordinary liquid electrolyte is used, the liquid electrolyte may be impregnated into an electrode to freely contact a positive electrode active material, but in the case of an all-solid-state battery, a positive electrode may include a solid electrolyte so as to improve mobility of lithium ions. In addition, the electrode may further include a conductive material for electronic conductivity.

In the case of a positive electrode for an all-solid-state battery including the solid electrolyte particles SEP, a large number of solid particles present in the positive electrode may not allow an even distribution of the conductive material, possibly resulting in non-uniform electrode performance. Moreover, as an electrode is made thicker to increase capacity, the uniformity of the electrode may be further reduced. According to examples of the present disclosure, performance of an all-solid-state battery may be enhanced due to the introduction of a solid electrolyte that simultaneously or contemporaneously improves electronic conductivity and ionic conductivity.

Referring to FIG. 4, the solid electrolyte particles SEP may form a cluster CLU with the positive electrode active material particle CAC. In this description, the cluster CLU may refer to a state where the solid electrolyte particle SEP and the positive electrode active material particle CAC are gathered or form an aggregate. The cluster CLU may indicate one group formed of or including individual particles that are in physical contact with each other while still remaining individual particles. In other words, the cluster CLU may denote a group formed of a specific particle together with adjacent particles. For example, the cluster CLU may be constituted by, or include, a plurality of positive electrode active material particles CAC and a plurality of solid electrolyte particles SEP.

In an example embodiment, as illustrated in FIG. 4, the cluster CLU may include one positive electrode active material particle CAC and a plurality of solid electrolyte particles SEP. In the cluster CLU, the positive electrode active material particle CAC may be electrically connected to at least one of the plurality of solid electrolyte particles SEP. In addition, contacting ones of the plurality of solid electrolyte particles SEP may be electrically connected to each other. Accordingly, the cluster CLU may include an electrical path ETP. The electrical path ETP may include an electrical passage between the positive electrode active material particle CAC and the solid electrolyte particle SEP and/or an electrical passage between a plurality of solid electrical particles SEP.

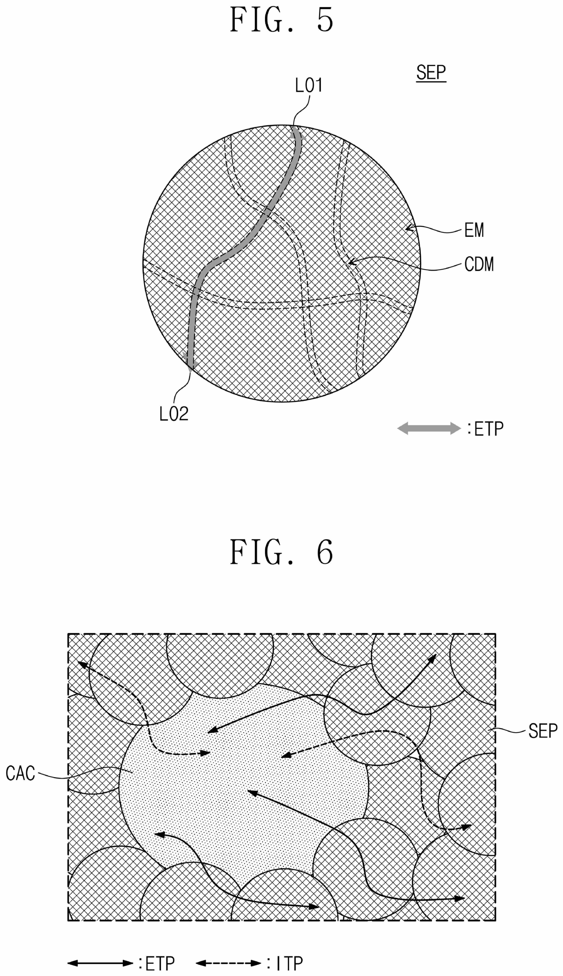

Referring to FIG. 5, the solid electrolyte particle SEP according to an example embodiment of the present disclosure may include a linear carbon-based conductive material CDM dispersed therein. As a carbon-based conductive material is included in the solid electrolyte particle SEP, the solid electrolyte particle SEP may have electrical conductivity.

For example, the linear carbon-based conductive material CDM may be configured to pass through the solid electrolyte particle SEP. As the linear carbon-based conductive material CDM passes through the solid electrolyte particle SEP, an electrical path ETP may be formed between a first location LO1 and a second location LO2 on a surface of the solid electrolyte particle SEP. Neighboring particles may be electrically connected through the electrical path ETP in the solid electrolyte particle SEP. The solid electrolyte particle SEP according to an example embodiment of the present disclosure may simultaneously or contemporaneously play the role of ionic conduction and electronic conduction.

In an example embodiment, a linear carbon-based conductive material of a first solid electrolyte particle SEP1 may form an electrical path ETP between the positive electrode active material particle CAC and the first solid electrolyte particle SEP1. Thus, the positive electrode active material particle CAC may be electrically connected to the first solid electrolyte particle SEP1.

In an example embodiment, a second solid electrolyte particle SEP2 may be in contact with the first solid electrolyte particle SEP1. An electrical path ETP may be formed by a linear carbon-based conductive material of the first solid electrolyte particle SEP1 and a linear carbon-based conductive material of the second solid electrolyte particle SEP2. Thus, the first solid electrolyte particle SEP1 and the second solid electrolyte particle SEP2 may be electrically connected to each other.

In conclusion, as illustrated in FIG. 6, the cluster CLU in the positive electrode active material layer 120 may form both an ionic conduction path ITP and an electrical path ETP. Thus, the positive electrode active material layer 120 may improve in mobility of both ions and electrons. The positive electrode active material particle CAC and the solid electrolyte particle SEP may be evenly mixed to improve electrode uniformity. There may also be an enhancement in electrode performance such as a reduction in resistance and an improvement in rate characteristics.

Referring back to FIG. 5, the solid electrolyte particle SEP may include the linear carbon-based conductive material CDM dispersed therein. For example, the solid electrolyte particle SEP may include a matrix EM formed of or including a solid electrolyte, and the linear carbon-based conductive material CDM provided in the matrix EM. The solid electrolyte matrix EM may occupy most of a volume of the solid electrolyte particle SEP, and may constitute a basic form of the solid electrolyte particle SEP. The linear carbon-based conductive material CDM may have a structure that passes through the solid electrolyte matrix EM. Through the configuration discussed above, the solid electrolyte particle SEP may simultaneously or contemporaneously play the role of an electrolyte and of a conductive material.

The linear carbon-based conductive material CDM in the solid electrolyte particle SEP may refer to a conductive material shaped like a linear particle, for example a conductive material which aspect ratio (a ratio of length to diameter) is equal to or greater than about 10. The linear carbon-based conductive material CDM may have an aspect ratio in a range of ≥ 20 to ≤ 700, ≥ 50 to ≤ 600, ≥ 60 to ≤ 300, or ≥ 100 to ≤ 300. As the linear carbon-based conductive material CDM has an aspect ratio within the range above, it may be possible to improve electronic conductivity of the solid electrolyte particle SEP, and to alleviate a local inequality of electronic conductivity in the solid electrolyte particle SEP.

In an example embodiment, the linear carbon-based conductive material CDM may include carbon nanotube (CNT), carbon nanofiber (CNF), vapor-grown carbon fiber (VGCF), or a combination thereof.

The linear carbon-based conductive material CDM may have a shape that extends in one direction, and thus may form a structure that passes through the solid electrolyte particle SEP. As the solid electrolyte particle SEP includes the linear carbon-based conductive material CDM, electronic conduction may be readily performed from a surface to an inside of the solid electrolyte particle SEP.

For example, the linear carbon-based conductive material CDM may penetrate the solid electrolyte particle SEP to provide conductive sites on the surface of the solid electrolyte particle SEP. A plurality of linear carbon-based conductive materials CDM may be dispersed in the solid electrolyte particle SEP to provide conductive sites on the surface of the solid electrolyte particle SEP. At least one linear carbon-based conductive material CDM may be dispersed in the solid electrolyte particle SEP to provide conductive sites on the surface of the solid electrolyte particle SEP. As a plurality of conductive sites are formed on the surface of the solid electrolyte particle SEP, the solid electrolyte particles SEP in contact with each other may be electrically connected to each other. Unlike an irregular or spherical conductive material, as a linear conductive material is dispersed in the solid electrolyte particle SEP, the solid electrolyte particle SEP may be allowed to have conductivity. As a result, the positive electrode active material layer 120 may decrease in internal resistance, and the all-solid-state battery 10 may improve in cycle characteristics.

The linear carbon-based conductive material CDM may have a diameter ranging from ≥ 2 nm to ≤ 200 nm, ≥ 100 nm to ≤ 200 nm, ≥ 5 nm to ≤ 150 nm, ≥ 50 nm to ≤ 100 nm, ≥ 10 nm to ≤ 50 nm, or ≥ 5 nm to ≤ 30 nm. The linear carbon-based conductive material CDM may have a length ranging from ≥ 100 nm to ≤ 500 nm, ≥ 100 nm to ≤ 300 nm, ≥ 100 nm to ≤ 1 µm, or ≥ 500 nm to ≤ 2 µm. The length of the linear carbon-based conductive material CDM may be defined as an average particle diameter of the linear carbon-based conductive material CDM.

In an example embodiment, a solid electrolyte of the solid electrolyte particle SEP may include a sulfide-based solid electrolyte. The sulfide-based solid electrolyte may include, for example, at least one of Li₂S-P₂S₃, Li₂S-P₂S₃-LiX (where X is or includes a halogen element), Li₂S-P₂S₅-Li₂O, Li₂S-P₂S₃-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each a positive integer, and "Z" is or includes at least one of Ge, Zn, and Ga), Li₂S-GeS₂, Li₂S-SiS₂-Li₃PO₄, Li₂S-SiS₂-LiₚMO_{q} (where p and q are each a positive integer, and "M" is or includes at least one of P, Si, Ge, B, Al, Ga, and In), Li₇₋ₓPS₆₋ₓClₓ (where 0 ≤ x ≤ 2), Li₇₋ₓPS₆₋ₓBrₓ (where 0 ≤ x ≤2), and Li₇₋ₓPS₆₋ₓIₓ (where 0 ≤ x ≤ 2). The sulfide-based solid electrolyte may be prepared by performing, for example, a melt quenching method or a mechanical milling method on a starting raw material such as Li₂S or P₂S₅. In addition, the resultant may be thermally treated after the treatment mentioned above. The solid electrolyte may be in an amorphous state, a crystalline state, or a mixed state of amorphous and crystalline states. The solid electrolyte may include at least one of sulfur (S), phosphorus (P), and lithium (Li) among component elements included in the sulfide-based solid electrolyte mentioned above. For example, the solid electrolyte may be or include a material including Li₂S-P₂S₅. When a material including Li₂S-P₂S₅ is included as the sulfide-based solid electrolyte of the solid electrolyte, a mixing molar ratio of Li₂S and P₂S₅ may range from, for example, about 20:80 to about 90:10, about 25:75 to about 90:10, about 30:70 to about 70:30, or about 40:60 to about 60:40.

The sulfide-based solid electrolyte may include, for example, an argyrodite-type solid electrolyte represented by Chemical Formula 1.

Chemical Formula 1: Li⁺₁₂₋ₙ₋ₓAⁿ⁺X²⁻₆₋ₓY⁻ₓ

In Chemical Formula 1, A may be or include at least one of P, As, Ge, Ga, Sb, Si, Sn, Al, In, Ti, V, Nb, or Ta; X may be or include at least one of S, Se, or Te; Y may be or include at least one of Cl, Br, I, F, CN, OCN, SCN, or N3; 1 ≤ n ≤ 5 and 0 ≤ x ≤ 2. The sulfide-based solid electrolyte may be or include an argyrodite-type compound including, for example, at least one of Li₇₋ₓPS₆₋ₓClₓ (where 0 ≤ x ≤ 2), Li₇₋ₓPS₆₋ₓBrₓ (where 0 ≤ x ≤ 2), and Li₇₋ₓPS₆₋ₓIₓ (where 0 ≤ x ≤ 2). The sulfide-based solid electrolyte may be or include an argyrodite-type compound including one or more of Li₆PS₅Cl, Li₆PS₅Br, and LisPS₅I.

Alternatively, the sulfide-based solid electrolyte may be or include an argyrodite-type compound including Li_{7-a-c}MₐPS_{6-c}X_{c} (where 0 ≤ a ≤ 2 and 0 ≤ c ≤ 2). In the chemical formula above, X may be or include at least one of F, Br, Cl, or a combination thereof. M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The solid electrolyte particle SEP in the positive electrode active material layer 120 may be the same as, or different from, a solid electrolyte in the solid electrolyte layer 300. The solid electrolyte particle SEP in the positive electrode active material layer 120 may have an average particle diameter (D₅₀) that is less than the average particle diameter of the solid electrolyte in the solid electrolyte layer 300. For example, the average particle diameter of the solid electrolyte particle SEP in the positive electrode active material layer 120 may be equal to or less than about 90 %, 80%, 70%, 60%, 50%, 40%, 30%, or 20% of the average particle diameter of the solid electrolyte in the solid electrolyte layer 300. In an example embodiment, the average particle diameter of the solid electrolyte particle SEP in the positive electrode active material layer 120 may range from ≥ 0.5 µm to ≤ 2 µm.

In addition, unlike the solid electrolyte particle SEP in the positive electrode active material layer 120, the solid electrolyte in the solid electrolyte layer 300 may include no linear carbon-based conductive material.

In an example embodiment, the solid electrolyte particle SEP in the positive electrode active material layer 120 may be present in an amount in a range of ≥ 10 wt% to ≤ 70 wt%, ≥ 10 wt% to ≤ 60 wt%, or ≥ 10 wt% to ≤ 30 wt%. The positive electrode active material particle CAC and the solid electrolyte particle SEP in the positive electrode active material layer 120 may have a weight ratio in a range of ≥ 70:30 to about 90:10. As the range above is satisfied, it may be possible to improve ionic conductivity and electronic conductivity of a positive electrode, and also to improve energy density of an all-solid-state battery.

The solid electrolyte particle SEP according to an example embodiment may be manufactured by, e.g., the following method. An electrolyte precursor and a linear carbon-based conductive material may be prepared. The description above may be identically applied to the linear carbon-based conductive material.

The electrolyte precursor may include at least one of a sulfur precursor, a phosphorus precursor, and a halide precursor. The sulfur precursor may include, for example, Li₂S. The phosphorus precursor may include, for example, P₂S₅. The halide precursor may be or include a compound of lithium and halide, and for example, may include LiX, where X is or includes a halogen element. In the chemical formula above, X may be or include at least one of F, Cl, Br, or I. The electrolyte precursor may be crushed, and then provided in powder form. The electrolyte precursor may be mixed in appropriate proportions in accordance with a stoichiometric ratio of a solid electrolyte which is eventually manufactured.

A manufacturing method according to an example embodiment of the present disclosure may include mixing an electrolyte precursor and a linear carbon-based conductive material to obtain a mixture, and thermally treating the mixture to prepare a solid electrolyte particle.

The mixing of the electrolyte precursor and the linear carbon-based conductive material may be achieved by, e.g., melt quenching, mechanical milling, or mixing through solvent dispersion, but any method capable of uniformly mixing solid particles may be included without being limited to the methods discussed above.

In an example embodiment, the mixing of precursor materials may be performed in a dry manner without using solvents or the like. The mixing method may include mechanical milling. The mechanical milling may include ball mill or jet mill, but the present disclosure is not limited thereto.

The mechanical milling may be performed in a dry manner, for example, under an inert atmosphere for a duration in a range of ≥ 1 hour to ≤ 1,000 hours, ≥ 1 hour to ≤ 100 hours, or ≥ 1 hour to ≤ 20 hours. The mechanical milling may be executed, for example, under an inert atmosphere at a rotation speed in a range of ≥ 100 rpm to ≤ 10,000 rpm, ≥ 150 rpm to ≤ 5,000 rpm, or ≥ 200 rpm to ≤ 500 rpm. The inert atmosphere may refer to an environment that substantially excludes oxygen. For example, the inert atmosphere may be an environment that includes at least nitrogen, argon, neon, or a combination thereof. The linear carbon-based conductive material may be present in an amount in a range of ≥ 1 wt% to ≤ 5 wt% relative to the total weight of the electrolyte precursor.

Afterwards, the mixture may be thermally treated. The heat treatment may be performed at a temperature in a range of ≥ 100°C to ≤ 800°C, ≥ 100°C to ≤ 600°C, ≥ 100°C to ≤ 550°C, ≥ 150°C to ≤ 200°C, or ≥ 450°C to ≤ 550°C. In addition, the heat treatment may be executed for a duration in a range of ≥ 2 hours to ≤ 20 hours, ≥ 3 hours to ≤ 15 hours, or ≥ 5 hours to ≤ 10 hours. As the heat treatment is carried out within the temperature and time ranges indicated above, the manufactured solid electrolyte particle may exhibit improved crystallinity. The thermally treated solid electrolyte particle may have an average particle diameter in a range of ≥ 0.5 µm to ≤ 2 µm.

The manufactured solid electrolyte may include a sulfide-based solid electrolyte matrix, and a linear carbon-based conductive material dispersed in the matrix. For example, the solid electrolyte particle may have a structure where a sulfide-based solid electrolyte forms a basic framework and the linear carbon-based conductive material is present therein.

The sulfide-based solid electrolyte may be originated from the electrolyte precursor. For example, the sulfide-based solid electrolyte may be or include an argyrodite-type compound including one or more of Li₆PS₅Cl, Li₆PS₅Br, and Li₆PS₅I. As the electrolyte precursor further includes transition metal, the sulfide-based solid electrolyte may be or include an argyrodite-type compound doped with transition metal.

The linear carbon-based conductive material may be configured to pass through the solid electrolyte particle, thereby forming conductive sites on a surface of the solid electrolyte particle. Thus, an electrical path may be formed between an arbitrary first location and an arbitrary second location on the surface of the solid electrolyte particle. The solid electrolyte particle manufactured according to an example embodiment of the present disclosure may be configured such that the electrical path between the first location and the second location is formed through the linear carbon-based conductive material that passes through the solid electrolyte particle. Accordingly, the solid electrolyte particle may be provided which simultaneously or contemporaneously has ionic conductivity and electronic conductivity.

### Binder

The positive electrode active material layer 120 may further include a binder. The binder may include, for example, at least one of styrene-butadiene rubber (SBR), polytetrafluoroethylene (PTFE), polyvinylidenefluoride, or polyethylene, but the present disclosure is not limited thereto and any suitable material used as a binder in the art may be utilized. The binder in the positive electrode active material layer 120 may be present in an amount in a range of, for example, ≥ 0.1 wt% to ≤ 10 wt%, ≥ 0.5 wt% to ≤ 5 wt%, or ≥ 0.5 wt% to ≤ 2 wt% of the total weight of the positive electrode active material layer 120. The binder may not be provided.

### Conductive Material

The positive electrode active material layer 120 may further include a conductive material. The conductive material may include, for example, a carbon-based material, a metal-based material, or a combination thereof. The metal-based material may include metal powder, metal fiber, or a combination thereof, but the present disclosure is not limited thereto, and any suitable metal-based material used as a conductive material in the art may be utilized.

The conductive material may include carbon. The conductive material, which includes carbon atoms, may include without limitation any material used as a conductive material in the art. For example, the conductive material may include at least one of crystalline carbon, amorphous carbon, or a combination thereof. The conductive material may include, for example, a calcined product of a carbon precursor. The conductive material may include, for example, a carbon nano-structure.

Unlike the linear carbon-based conductive material CDM in the solid electrolyte particle SEP, the conductive material may be separately present in the positive electrode active material layer 120. For example, the conductive material may be distinguished from the linear carbon-based conductive material CDM in the solid electrolyte particle SEP.

In an example, the conductive material may not be provided. As the conductive material is omitted, the positive electrode active material layer 120 may improve in pellet density and energy density. Even though the conductive material is omitted, the linear carbon-based conductive material CDM is included in the solid electrolyte particle SEP, and thus a positive electrode may maintain conductivity.

According to an example embodiment of the present disclosure, the positive electrode active material layer 120 may have improved mixing uniformity of solid particles therein. Even when the positive electrode active material layer 120 is formed thick, performance consistency may be maintained. Therefore, although the positive electrode active material layer 120 has an increased thickness, it may be possible to improve pellet density, battery capacity, and battery energy density. In an example embodiment, the positive electrode active material layer 120 may have a thickness in a range of ≥ 50 µm to ≤ 2,000 µm, ≥ 100 µm to ≤ 1,000 µm, or ≥ 200 µm to ≤ 500 µm.

### Negative Electrode

Referring back to FIG. 2, the negative electrode 200 may include a negative electrode current collector 210 and a coating layer 220 on the negative electrode current collector 210. The negative electrode current collector 210 may provide a reference surface on which the coating layer 220 is disposed. The negative electrode current collector 210 may include a material that does not react with lithium, for example, a material that does not form an alloy or a compound with lithium. For example, the negative electrode current collector 210 may include at least one metal such as or including at least one of copper (Cu), stainless steel, titanium (Ti), iron (Fe), cobalt (Co), and nickel (Ni). The negative electrode current collector 210 may have a thickness ranging from, for example, ≥ 1 µm to ≤ 20 µm, ≥ 5 µm to < 15 µm, or ≥ 7 µm to ≤ 10 µm.

The negative electrode current collector 210 may be formed of or include one of the metals discussed above, an alloy of two or more of the metals discussed above, or a coating material. The negative electrode current collector 210 may have, for example, a plate or foil shape. In an example embodiment, the negative electrode current collector 210 may not be provided.

Although not shown, the negative electrode current collector 210 according to an example embodiment may include a base film, and a metal layer disposed on one side, or on opposite sides, of the base film. The base film may include, for example, a polymer. The polymer may be or include, for example, a thermoplastic polymer. The polymer may include, for example, at least one of polyethyleneterephthalate (PET), polyethylene (PE), polypropylene (PP), polybutyleneterephthalate (PBT), polyimide (PI), or a combination thereof. The polymer may be a dielectric polymer. As the base film includes a dielectric thermoplastic polymer, the base film may be softened or liquefied to hinder battery operation when a short-circuit occurs, thereby reducing or suppressing a rapid increase in electric current. The metal layer may include, for example, at least one of copper (Cu), stainless steel, titanium (Ti), iron (Fe), cobalt (Co), nickel (Ni), or an alloy thereof. The negative electrode current collector 210 may additionally include one or both of a metal chip and a lead tab. The detailed description of the positive electrode current collector 110 may be applicable to the description of the base film, the metal layer, the metal chip, and the lead tab of the negative electrode current collector 210. As the negative electrode current collector 210 has such a structure, the negative electrode 200 may have a reduced weigh, and as a result, the all-solid-state battery 10 may have an improved energy density.

The coating layer 220 may include metal and carbon. For example, the coating layer 220 may include at least one metal such as or including at least one of gold (Au), platinum (Pt), palladium (Pd), silicon (Si), silver (Ag), aluminum (Al), bismuth (Bi), tin (Sn), and zinc (Zn). The coating layer 220 may include at least one carbon such as or including at least one of carbon black, acetylene black, furnace black, ketjen black, and graphene. In an example embodiment, the coating layer 220 may include a mixture of carbon black and silver (Ag).

The coating layer 220 may further include an additive in addition to metal and carbon. The coating layer 220 may include at least one additive such as or including at least one of, for example, a binder, a filler, a coating agent, a dispersant, and an ionic conductivity agent.

The coating layer 220 may have a thickness that is less than the thickness of the positive electrode active material layer 120. The coating layer 220 may have a thickness that is equal to or less than about 50%, 40%, 30%, 20%, 10%, or 5% of the thickness of the positive electrode active material layer 120. The thickness of the coating layer 220 may range from, for example, ≥ 1 µm to ≤ 20 µm, ≥ 2 µm to ≤ 10 µm, or ≥ 3 µm to ≤ 7 µm. When the coating layer 220 has an excessively or substantially small thickness, lithium dendrites formed between the coating layer 220 and the negative electrode current collector 210 may collapse the coating layer 220 and as a result reduce cycle characteristics of the all-solid-state battery 10. When the coating layer 220 has an excessively or substantially large thickness, the all-solid-state battery 10 may have a reduced energy density, and an internal resistance of the all-solid-state battery 10 may increase due to the coating layer 220, thereby reducing cycle characteristics of the all-solid-state battery 10.

Although not shown, a carbon layer may further be included to increase adhesion between the coating layer 220 and the solid electrolyte layer 300.

### Solid Electrolyte Layer

The solid electrolyte layer 300 may be provided between the positive electrode 100 and the negative electrode 200. The solid electrolyte layer 300 may include a sulfide-based solid electrolyte with desired or improved lithium ionic conductivity. The solid electrolyte included in the solid electrolyte layer 300 may include a material that is the same as or different from the material of the solid electrolyte particle (see SEP of FIG. 3) included in the positive electrode active material layer 120. For example, the solid electrolyte in the solid electrolyte layer 300 may not include a linear carbon-based conductive material.

The solid electrolyte layer 300 may include a first solid electrolyte layer 310 and a second solid electrolyte layer 320. The first solid electrolyte layer 310 may be adjacent to the positive electrode 100, and the second solid electrolyte layer 320 may be adjacent to the negative electrode 200.

Referring to FIG. 2, the first solid electrolyte layer 310 may include a first solid electrolyte. The first solid electrolyte may have a substantially spherical or oval particle shape. The first solid electrolyte may include a sulfide-based solid electrolyte. The first solid electrolyte may be in an amorphous state, a crystalline state, or a mixed state of amorphous and crystalline states. In addition, the first solid electrolyte may include at least one of sulfur (S), phosphorus (P), and lithium (Li) among component elements included in the sulfide-based solid electrolyte mentioned above. For example, the first solid electrolyte may be or include a material including Li₂S-P₂S₅. When Li₂S-P₂S₅ is utilized as the sulfide-based solid electrolyte material of the first solid electrolyte, a mixing molar ratio of Li₂S and P₂S₅ may be in a range of about 50:50 to about 90:10.

In an example embodiment, the first solid electrolyte may include an argyrodite-type compound including, for example, at least one of Li₇₋ₓPS₆₋ₓClₓ (where 0 ≤ x ≤ 2), Li₇₋ₓPS₆₋ₓBrₓ (where 0 ≤ x ≤ 2), and Li₇₋ₓPS₆₋ₓIₓ (where 0 ≤ x ≤ 2). The first solid electrolyte may include an argyrodite-type compound including at least one of Li₆PS₅Cl, Li₆PS₅Br, and Li₆PS₅I.

Alternatively, the first solid electrolyte may include an argyrodite-type compound including Li_{7-a-c}MₐPS_{6-c}X_{c}. In the chemical formula above, X may be or include at least one of Cl, Br, or a combination thereof. M may be or include at least one of Na, K, Fe, Mg, Ca, Ag, Cu, Zr, Zn, or a combination thereof. The subscripts a and c may each be a real number between 0 and 2 and possibly including 0 and 2.

The argyrodite-type first solid electrolyte may have a density in a range of ≥ 1.5 g/cc to ≤ 2.0 g/cc. As the argyrodite-type first solid electrolyte has a density that is equal to or greater than about 1.5 g/cc, it may be possible to decrease an internal resistance of the all-solid-state battery 10, and to hinder or prevent the solid electrolyte layer 300 from short-circuit and penetration caused by the formation of lithium dendrites. The first solid electrolyte may have a modulus in a range of, for example, ≥ 15 GPa to ≤ 35 GPa.

The second solid electrolyte layer 320 may include a second solid electrolyte. The second solid electrolyte may have a substantially spherical or oval particle shape. The second solid electrolyte may include a sulfide-based solid electrolyte. A description of the second solid electrolyte may be the same as or similar to the description of the first solid electrolyte. In an example embodiment, the second solid electrolyte may have substantially the same composition as the composition of the first solid electrolyte. Alternatively, the second solid electrolyte may have a similar composition to the composition of the first solid electrolyte.

The second solid electrolyte may be in direct contact with the coating layer 220. Thus, the second solid electrolyte may suppress lithium dendrites formed between the coating layer 220 and the negative electrode current collector 210. The second solid electrolyte may effectively reduce or suppress negative electrode side reactions. Therefore, the all-solid-state battery 10 according to the present disclosure may improve in cell performance.

Each of, or at least one of, the first and second solid electrolyte layers 310 and 320 may further include a binder. The binder of the solid electrolyte layer 300 may include, for example, at least one of styrene-butadiene rubber (SBR), polytetrafluoroethylene, polyvinylidenefluoride, or polyethylene, but the present disclosure is not limited thereto. The binder of the solid electrolyte layer 300 may be the same as, or different from, the binder of the positive electrode active material layer 120, or the binder of the coating layer 220.

The binder of the solid electrolyte layer 300 may be present in an amount in a range of ≥ 0.1 wt% to ≤ 10 wt%, ≥ 0.1 wt% to ≤ 5 wt%, ≥ 0.1 wt% to ≤ 3 wt%, ≥ 0.1 wt% to ≤ 1 wt%, ≥ 0 wt% to ≤ 0.5 wt%, or ≥ 0 wt% to ≤ 0.1 wt% of the total weight of the solid electrolyte layer 300.

In an example embodiment of the present disclosure, the solid electrolyte layer 300 may be provided as a single-layered structure, instead of a double-layered structure of the first solid electrolyte layer 310 and the second solid electrolyte layer 320.

Referring back to FIGS. 1 and 2, the positive electrode 100 and the first solid electrolyte layer 310 may constitute a positive electrode mixture layer CSH. The negative electrode 200 and the second solid electrolyte layer 320 may constitute a negative electrode mixture layer ASH. The positive electrode mixture layer CSH may be stacked on the negative electrode mixture layer ASH.

The negative electrode mixture layer ASH and the positive electrode mixture layer CSH may have areas that are different from each other. For example, the area of the negative electrode mixture layer ASH may be greater than the area of the positive electrode mixture layer CSH. The positive electrode mixture layer CSH may completely inwardly overlap the negative electrode mixture layer ASH.

In an example embodiment of the present disclosure, the first solid electrolyte layer 310 may have substantially the same area as the area of the positive electrode 100. The second solid electrolyte layer 320 may have substantially the same area as the area of the negative electrode 200.

For example, the positive electrode mixture layer CSH may have a first width WI1 in a first direction D1. The negative electrode mixture layer ASH may have a second width WI2 in the first direction D1. The first width WI1 may be less than the second width WI2. The positive electrode mixture layer CSH may have a third width WI3 in a second direction D2. The negative electrode mixture layer ASH may have a fourth width WI4 in the second direction D2. In an example, the third width WI3 may be less than the fourth width WI4.

The all-solid-state battery 10 according to examples of the present embodiment may be fabricated by forming the negative electrode mixture layer ASH on a first carrier film, forming the positive electrode mixture layer CSH on a second carrier film, and then laminating the negative electrode mixture layer ASH and the positive electrode mixture layer CSH.

In an example embodiment, as illustrated in FIG. 2, the positive electrode active material layer 120 in the discharged state may have a first thickness TK1. The all-solid-state battery 10 may have a first height HE1 in a third direction D3. The first height HE1 may be a sum of a thickness of the positive electrode mixture layer CSH and a thickness of the negative electrode mixture layer ASH.

In the example embodiment that follows, a detailed description of technical features repetitive to the technical features discussed above with reference to FIGS. 1 to 3 is omitted, and a difference thereof is discussed in detail.

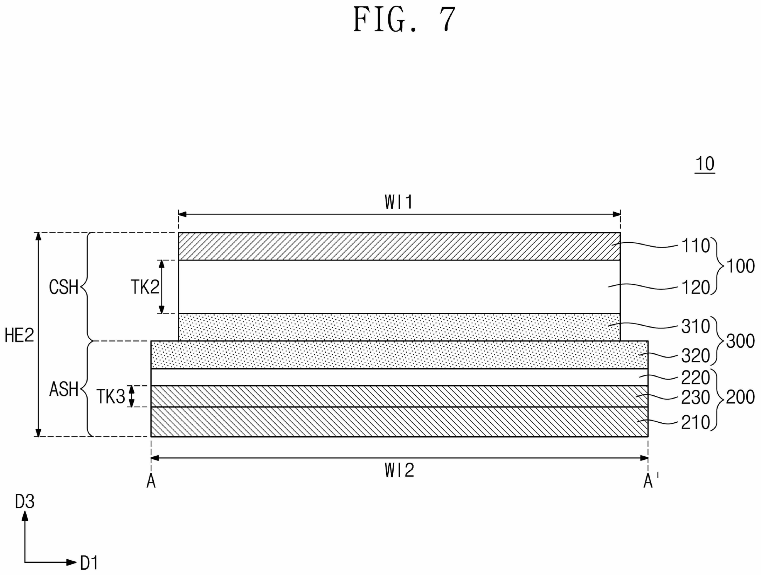

FIG. 7 illustrates a cross-sectional view taken along line A-A' of FIG. 1, showing an all-solid-state battery according to an example embodiment of the present disclosure. Referring to FIG. 7, in an example embodiment, the all-solid-state battery 10 in a charged state may further include a lithium metal layer 230 between the negative electrode current collector 210 and the coating layer 220. The negative electrode 200 according to the example embodiment may include a negative electrode current collector 210, a coating layer 220, and a lithium metal layer 230 between the negative electrode current collector 210 and the coating layer 220.

The lithium metal layer 230 may include lithium or lithium alloy. As the lithium metal layer 230 is a metal layer including lithium, the lithium metal layer 230 may be configured as, for example, a lithium reservoir. The lithium alloy may be, for example, Li-Al alloy, Li-Sn alloy, Li-In alloy, Li-Ag alloy, Li-Au alloy, Li-Zn alloy, Li-Ge alloy, or Li-Si alloy, but any suitable material used as a lithium alloy in the art may be applicable. The lithium metal layer 230 may be formed of lithium, one of the alloys mentioned above, or various types of alloys. The lithium metal layer 230 may be, for example, a plated layer. For example, the lithium metal layer 230 may be plated between the coating layer 220 and the negative electrode current collector 210 when the all-solid-state battery 10 is charged.

The lithium metal layer 230 may have a third thickness TK3. The third thickness TK3 may range from, for example, ≥ 1 µm to ≤ 500 µm, ≥ 1 µm to ≤ 200 µm, ≥ 1 µm to ≤ 150 µm, ≥ 1 µm to ≤ 100 µm, or ≥ 1 µm to ≤ 50 µm, but the present disclosure is not particularly limited thereto. When the third thickness TK3 of the lithium metal layer 230 is excessively or substantially small, the lithium metal layer 230 may be difficult to act as a lithium reservoir. When the third thickness TK3 of the lithium metal layer 230 is excessively or substantially large, the all-solid-state battery 10 may increase in mass and volume, and may rather have a possibility of a reduction in cycle characteristics.

In an embodiment of the present disclosure, the lithium metal layer 230 in the negative electrode 200 may be, for example, provided between the negative electrode current collector 210 and the coating layer 220 before the all-solid-state battery 10 is assembled. When the lithium metal layer 230 is disposed between the negative electrode current collector 210 and the coating layer 220 before the all-solid-state battery 10 is assembled, the lithium metal layer 230 may be a metal layer including lithium, and thus may be configured as a lithium reservoir. For example, before the all-solid-state battery 10 is assembled, a lithium foil may be disposed between the negative electrode current collector 210 and the coating layer 220.

When the lithium metal layer 230 is plated by charge after the all-solid-state battery 10 is assembled, the lithium metal layer 230 is not included during the assembly of the all-solid-state battery 10, and thus the all-solid-state battery 10 may have an increased energy density. When the all-solid-state battery 10 is charged, charge may be achieved beyond a charge capacity of the coating layer 220. For example, the coating layer 220 may be over-charged. In an initial charge, lithium may be absorbed into the coating layer 220. When charge is achieved beyond a charge capacity of the coating layer 220, lithium may be precipitated between the coating layer 220 and the negative electrode current collector 210. The lithium metal layer 230 may be formed by the precipitated lithium.

The lithium metal layer 230 may be mainly formed of or include lithium (or metal lithium). During discharge, lithium of the lithium metal layer 230 may be ionized to move toward the positive electrode 100. For example, lithium may be included as a negative electrode active material in the all-solid-state battery 10. In addition, since the coating layer 220 covers the lithium metal layer 230, the coating layer 220 may cover the lithium metal layer 230, and may also suppress deposition and growth of lithium dendrites. Therefore, the coating layer 220 may reduce or suppress short-circuits and capacity reduction of the all-solid-state battery 10, and improve cycle characteristics of the all-solid-state battery 10.

When the lithium metal layer 230 is formed by charge after the all-solid-state battery 10 is assembled, the negative electrode 200, or the negative electrode current collector 210, the coating layer 220, and a region between the negative electrode current collector 210 and the coating layer 220, may be or include a lithium-free region that does not include lithium in either an initial state, or a state after complete discharge of the all-solid-state battery 10.

The positive electrode active material layer 120 from which lithium ions are discharged due to charge of the all-solid-state battery 10 may have a second thickness TK2. The second thickness TK2 of the positive electrode active material layer 120 may be less than the first thickness TK1 of FIG. 2.

In an example embodiment of the present disclosure, a difference between the first thickness TK1 and the second thickness TK2 may be substantially the same as, or similar to, the third thickness TK3 of the lithium metal layer 230. For example, the third thickness TK3 may be in a range of ≥ 1.0 to ≤ 1.5 times, or a range of ≥ 1 to ≤ 1.2 times of the difference between the first thickness TK1 and the second thickness TK2. According to examples of the present disclosure, a thickness of the positive electrode active material layer 120 may be correspondingly reduced as large as a thickness of the lithium metal layer 230 formed by charge of the all-solid-state battery 10.

Although not shown, the all-solid-state battery 10 may be operated (e.g., charged and/or discharged) in a pressed state by a pressing jig. In an example embodiment, the all-solid-state battery 10 may be pressed at a pressure in a range of ≥ 0.8 MPa to ≤ 2 MPa. For example, the all-solid-state battery 10 may have an internal pressure of about 1 MPa during discharge and an internal pressure of about 1.5 MPa during charge. A ratio of the internal pressure of the all-solid-state battery 10 in a charged state to the internal pressure of the all-solid-state battery 10 in a discharged state may range from ≥ 1.0 to ≤ 2.0 or ≥ 1.2 to ≤ 1.8.

A height (or thickness or volume) of the all-solid-state battery 10 may be changed depending on charge and discharge of the all-solid-state battery 10 in the pressed state. According to examples of the present disclosure, a thickness of the positive electrode active material layer 120 in the D3 direction may be reduced corresponding to the lithium metal layer 230 formed by charge of the all-solid-state battery 10. Thus, a second height HE2 of the all-solid-state battery 10 in a charged state as illustrated in FIG. 7 may be similar to the first height HE1 of the all-solid-state battery 10 in a discharged state as illustrated in FIG. 2. For example, the second height HE2 may be in a range of ≥ 1 to ≤ 1.5 times or ≥ 1 to ≤ 1.2 times the first height HE1.

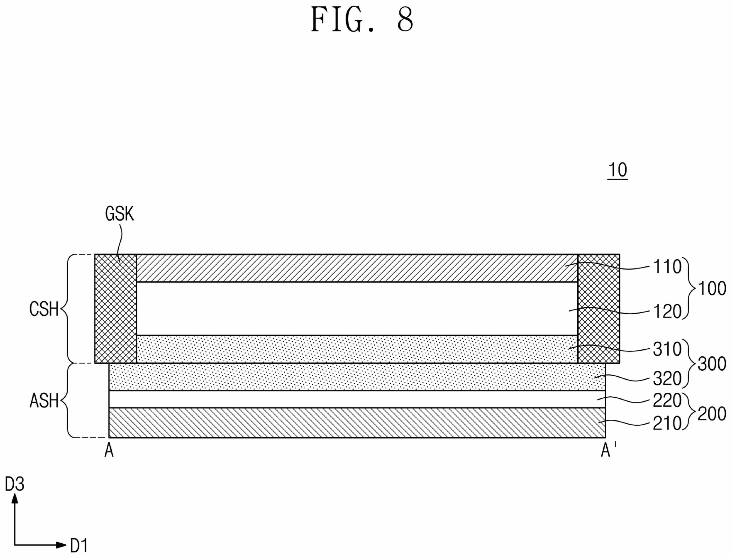

FIG. 8 illustrates a cross-sectional view taken along line A-A' of FIG. 1, showing an all-solid-state battery according to an example embodiment of the present disclosure. Referring to FIG. 8, the all-solid-state battery 10 according to examples of the present embodiment may further include a gasket GSK. The gasket GSK may be configured to surround the positive electrode mixture layer CSH. A difference in area between the negative electrode mixture layer ASH and the positive electrode mixture layer CSH may result in a step difference on a lateral surface of the all-solid-state battery 10, and the gasket GSK may substantially fill the step difference. The gasket GSK may surround, e.g., four lateral surfaces of the positive electrode mixture layer CSH. For example, a thickness of the gasket GSK in the D3 direction may be substantially the same as the thickness of the positive electrode mixture layer CSH.

A top surface of the second solid electrolyte layer 320 may include a first region in contact with the first solid electrolyte layer 310 and a second region in contact with the gasket GSK. The second region may be a circumferential area of the top surface of the second solid electrolyte layer 320. The second region may surround the first region.

The gasket GSK may hinder or substantially prevent the solid electrolyte layer 300 from cracking when the all-solid-state battery 10 is fabricated and/or when the all-solid-state battery 10 is charged and discharged. Thus, the all-solid-state battery 10 may improve in cycle characteristics. When the all-solid-state battery 10 does not include the gasket GSK, an irregular pressure may be applied to the positive electrode mixture layer CSH and the negative electrode mixture layer ASH, and therefore the solid electrolyte layer 300 may undergo cracking to induce growth of lithium metal, thereby increasing the possibility of occurrence of short-circuit.

A thickness of the gasket GSK in the D3 direction may be substantially the same as, or greater than, the thickness of the positive electrode mixture layer CSH. As the thickness of the gasket GSK is the same as the thickness of the positive electrode mixture layer CSH, the positive electrode mixture layer CSH and the negative electrode mixture layer ASH may be provided with a uniform pressure therebetween, and may be sufficiently close to each other, thereby reducing an interfacial resistance between the first solid electrolyte layer 310 and the second solid electrolyte layer 320. In addition, as the solid electrolyte layer 300 is sufficiently sintered when the all-solid-state battery 10 is pressed fabricated, an internal resistance of the solid electrolyte layer 300 may decrease.

The gasket GSK may have, for example, a single-layered structure. Alternatively, although not shown in figures, the gasket GSK may have a multi-layered structure. In the gasket GSK with the multi-layered structure, each layer may have a different composition. The gasket GSK with the multi-layered structure may have a two-layered structure, a three-layered structure, a four-layered structure, or a five-layered structure. The gasket GSK with the multi-layered structure may include, for example, at least one adhesive layer and at least one support layer.

The gasket GSK may include, for example, a flame retardant inactive member. As the flame retardant inactive member provides flame retardancy, the all-solid-state battery 10 may be hindered or substantially prevented from thermal runaway and ignition possibility. Therefore, the gasket GSK may improve stability of the all-solid-state battery 10. As the flame retardant inactive member absorbs moisture remaining in the all-solid-state battery 10, a degradation of the all-solid-state battery 10 may be reduced or prevented to improve cycle characteristics of the all-solid-state battery 10.

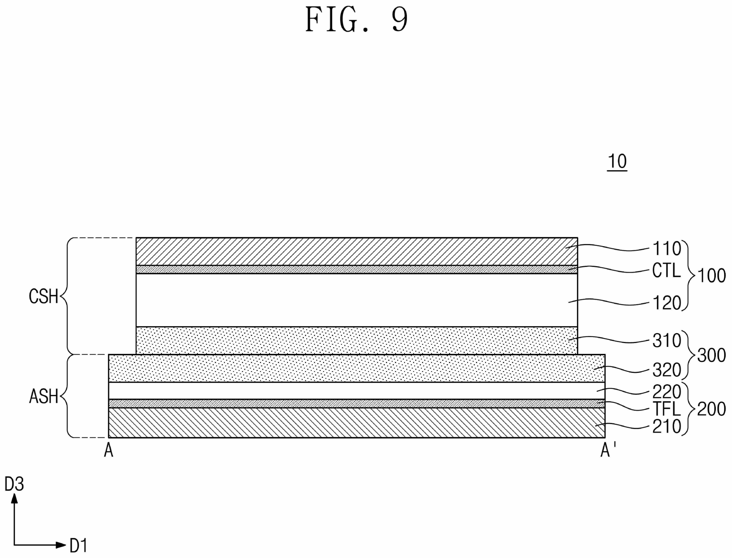

FIG. 9 illustrates a cross-sectional view taken along line A-A' of FIG. 1, showing an all-solid-state battery according to an example embodiment of the present disclosure. Referring to FIG. 9, the positive electrode 100 may further include a coating layer CTL provided between the positive electrode current collector 110 and the positive electrode active material layer 120. The coating layer CTL may be disposed, for example, on one side, or on opposite sides, of the positive electrode current collector 110. The coating layer CTL may be coated on the one side, or on the opposite sides, of the positive electrode current collector 110. In an example, no layer may be disposed between the positive electrode current collector 110 and the coating layer CTL.

As the coating layer CTL is directly disposed on the one side, or on the opposite sides, of the positive electrode current collector 110, there may be improved adhesion between the positive electrode current collector 110 and the positive electrode active material layer 120. As the coating layer CTL is disposed between the positive electrode current collector 110 and the positive electrode active material layer 120, it may be possible to effectively reduce or suppress side reactions between the positive electrode current collector 110 and a filler, a solid electrolyte, or a positive electrode active material. For example, the coating layer CTL may reduce or prevent a sulfide-based positive electrode active material (e.g., Li₂S) from being corroded due to the positive electrode current collector 110. Accordingly, the coating layer CTL may reduce or suppress a degradation of the all-solid-state battery 10 during charge and discharge, and may improve cycle characteristics of the all-solid-state battery 10.

A thickness of the coating layer CTL may be, for example, in a range of ≥ 0.01% to ≤ 20%, ≥ 0.1% to ≤ 20%, ≥ 0.5% to ≤ 20%, ≥ 1% to ≤ 15%, ≥ 1% to ≤ 10%, ≥ 2% to ≤ 8%, or ≥ 3% to ≤ 7% of the thickness of the positive electrode current collector 110. The thickness of the coating layer CTL may range from, for example, ≥ 10 nm to ≤ 5 µm, ≥ 50 nm to ≤ 5 µm, ≥ 200 nm to ≤ 4 µm, ≥ 500 nm to ≤ 3 µm, ≥ 500 nm to ≤ 2 µm, ≥ 500 nm to ≤ 1.5 µm, or ≥ 700 nm to ≤ 1.3 µm. As the thickness of the coating layer CTL falls within the range above, there may be improved adhesion between the positive electrode current collector 110 and the positive electrode active material layer 120, and an increase in interfacial resistance between the positive electrode current collector 110 and the positive electrode active material layer 120 may be reduced or suppressed. The thickness of the coating layer CTL may be measured via, for example, a scanning electron microscope (SEM) image of a cross-section of the coating layer CTL.

The coating layer CTL may include, for example, a carbon-based conductive material. The carbon-based conductive material included in the coating layer CTL may be or include at least one of the carbon-based conductive materials included as the positive electrode active material layer 120. The coating layer CTL may include a carbon-based conductive material that is the same as the carbon-based conductive material of the positive electrode active material layer 120. As the coating layer CTL includes a carbon-based conductive material, the coating layer CTL may be or include a conductive layer.

The coating layer CTL may additionally include, for example, a binder. As the coating layer CTL additionally includes a binder, there may be an improvement in adhesion between the positive electrode current collector 110 and the positive electrode active material layer 120. The binder included in the coating layer CTL may be or include, for example, a conductive binder or a non-conductive binder. The conductive binder may be or include, for example, an ionically conductive binder and/or an electronically conductive binder. The binder having both ionically conductive and electronically conductive properties may be classified as both the ionically conductive binder and the electronically conductive binder.

The binder included in the coating layer CTL may be or include at least one of the binders used for the positive electrode active material layer 120. The coating layer CTL may include a binder that is the same as the binder of the positive electrode active material layer 120. The binder included in the coating layer CTL may be or include, for example, a fluorine-based binder. The fluorine-based binder included in the coating layer CTL may include, for example, polyvinylidenefluoride (PVdF), polytetrafluoroethylene (PTFE), or a combination thereof. The coating layer CTL may be or include, for example, a binding layer including a binder. The coating layer CTL may be or include, for example, a conductive layer including a binder and a carbon-based conductive material.

A dry or wet process may be performed to place the coating layer CTL on the positive electrode current collector 110. For example, a dry process such as CVD, PVD, or other suitable deposition processes may be performed to place the coating layer CTL on the positive electrode current collector 110. For example, a wet process such as spin coating or deep coating may be performed to place the coating layer CTL on the positive electrode current collector 110. For example, a deposition process may be performed to deposit a carbon-based conductive material on a substrate, such that the coating layer CTL may be disposed on the positive electrode current collector 110. The coating layer CTL, which is dry coated, may be formed of or include a carbon-based conductive material, and may not include a binder. For example, a composition including a carbon-based conductive material, a binder, and a solvent may be coated on a surface of an electrode current, and dried to place the coating layer CTL on the positive electrode current collector 110. The coating layer CTL may have a single-layered structure or a multi-layered structure including a plurality of layers. The multi-layered structure may be a two-layered structure, a three-layered structure, or a four-layered structure.

The negative electrode 200 may further include a thin layer TFL between the negative electrode current collector 210 and the coating layer 220. The thin layer TFL may be provided on one side of the negative electrode current collector 210 to form an alloy with lithium.

The thin layer TFL may include, for example, an element capable of forming an alloy with lithium. The element capable of forming an alloy with lithium may include, for example, at least one of gold, silver, zinc, tin, indium, silicon, aluminum, or bismuth, but the present disclosure is not limited thereto and any suitable element capable of forming an alloy with lithium in the art may be utilized. The thin layer TFL may be formed of or include one of the metals discussed above, or an alloy of various types of metals.

As the thin layer TFL is disposed on one side of the negative electrode current collector 210, a plated shape of the lithium metal layer (see 230 of FIG. 7) plated between the thin layer TFL and the coating layer 220 may be more planarized, and the all-solid-state battery 10 may improve in cycle characteristics.

A thickness of the thin layer TFL may range from, for example, 1 nm ≥to ≤ 800 nm, about 10 nm ≥to ≤ 700 nm, about 50 nm ≥to ≤ 600 nm, or about 100 nm ≥to ≤ 500 nm. When the thickness of the thin layer TFL is less than about 1 nm, it may be difficult to achieve performance caused by the thin layer TFL. When the thickness of the thin layer TFL is excessively or substantially large, the thin layer TFL may absorb lithium to reduce a precipitation amount of lithium, thereby reducing an energy density and cycle characteristics of the all-solid-state battery 10. For example, vapor deposition, sputtering, or plating may be performed to form the thin layer TFL on the negative electrode current collector 210, but the present disclosure is not limited thereto, and any suitable methods capable of forming a thin layer in the art may be utilized.

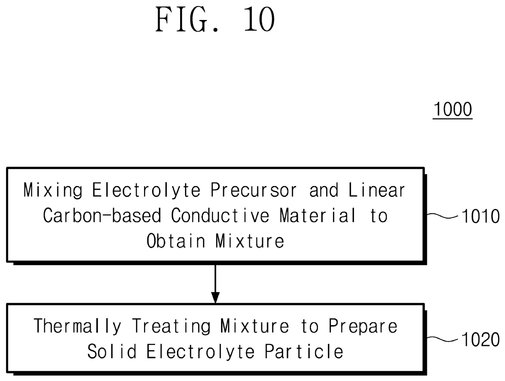

FIG. 10 is a flow chart illustrating a method of manufacturing a solid electrolyte, according an example embodiment of the present disclosure. In FIG. 10, the method 1000 includes operation 1010, which includes mixing an electrolyte precursor and a linear carbon-based conductive material to obtain a mixture. For example, the linear carbon-based conductive material includes at least one of carbon nanotube (CNT), carbon nanofiber (CNF), and vapor-grown carbon fiber (VGCF). In a further example, the electrolyte precursor includes at least one of a sulfur precursor, a phosphorus precursor, and a halide precursor. In another example, mixing the electrolyte precursor and the linear carbon-based conductive material is performed via a ball milling process. Operation 1020 includes thermally treating the mixture to prepare a solid electrolyte particle. For example, the linear carbon-based conductive material is configured to penetrate the solid electrolyte particle to form an electrical path between a first location and a second location on a surface of the solid electrolyte particle. In another example, thermally treating the mixture is performed at a temperature in a range of ≥ 100°C to ≤ 800°C. In a further example, an amount of the linear carbon-based conductive material is in a range of ≥ 1 wt% to ≤ 5 wt% relative to a total weight of the mixture.

The present disclosure is discussed below in detail through example embodiments. These example embodiments, however, are provided to illustrate the present disclosure as an example, and the scope of the present disclosure is not limited to these embodiments.

### Preparation 1: First Solid Electrolyte

An electrolyte precursor and a linear carbon-based conductive material were prepared. For example, as the electrolyte precursor, Li₂S powder, P₂S₅ powder, and LiCl powder were prepared in a stoichiometric ratio to achieve a composition of Li₆PS₅Cl. A vapor-grown carbon fiber (VGCF) of 150 nm in diameter was prepared as the linear carbon-based conductive material. The electrolyte precursor, the linear carbon-based conductive material, and zirconia balls of about 5 mm in diameter were introduced into a vessel and mechanically milled for 24 hours at room temperature under an argon atmosphere to form a mixture. The linear carbon-based conductive material was present in an amount of 1 wt% relative to the total weight of the mixture.

The mixture was introduced into a carbon crucible and thermally treated for 8 hours at about 550°C under an argon atmosphere to prepare a first solid electrolyte particle. A particle diameter of the prepared particle was about 0.5 µm.

### Preparation 2: Second Solid Electrolyte

Unlike Preparation 1, only an electrolyte precursor was prepared. For example, as the electrolyte precursor, Li₂S powder, P₂S₅ powder, and LiCl powder were prepared in a stoichiometric ratio to achieve a composition of Li₆PS₅Cl. The electrolyte precursor and zirconia balls of about 5 mm in diameter were introduced into a vessel and mechanically milled for 24 hours at room temperature under an argon atmosphere to form a mixture.

The mixture was introduced into a carbon crucible and thermally treated for 10 hours at about 500°C under an argon atmosphere to prepare a second solid electrolyte particle. A particle diameter of the prepared particle was about 3 µm.

### Preparation 3: Third Solid Electrolyte

A solid electrolyte particle was prepared in the same method as in Preparation 2, with a difference that only the milling condition was modified. A particle diameter of the prepared particle was about 0.5 µm.

### Embodiment 1-1: Fabrication of All-Solid-State Battery

### Positive Electrode:

A particle with a composition of LiNi_{0.94}Co_{0.04}Mn_{0.02}O₂ and an average particle diameter of about 10 µm was prepared as a positive electrode active material. The first solid electrolyte particle of Preparation 1 was prepared. Polyvinylidenefluoride-co-hexafluoropropylene (PVdF-HFP) was prepared as a binder. The positive electrode active material, the first solid electrolyte, and the binder were mixed in a weight ratio of 80:19:1 to prepare a composition for forming a positive electrode active material layer.

The composition for forming a positive electrode active material layer was dry coated on a positive electrode current collector formed of an aluminum foil whose one side is carbon coated, and pressed for 10 minutes under 1 MPa at 130°C to manufacture a positive electrode. A thickness of a positive electrode active material layer was about 80 µm.

### Negative Electrode:

A stainless steel (SUS) thin layer of 10 µm in thickness was prepared as a negative electrode current collector. There were carbon black (CB) of about 30 nm in average particle diameter and a silver (Ag) particle of about 60 nm in average particle diameter. 4 grams of mixed powder, in which carbon black (CB) and silver (Ag) particles were mixed in a weight ratio of 3:1, was introduced into a vessel, and 4 grams of an N-methylpyrrolidone (NMP) solution including 7 wt% of a polyvinylidenefluoride (PVdF) binder (#9300 from Kureha Co.) was added to prepare a mixed solution. A slurry was prepared by gradually adding N-methylpyrrolidone (NMP) to the prepared mixed solution while agitating the mixture. A bar coater was used to coat the prepared slurry on a stainless steel (SUS) sheet, and dried for 10 minutes at 80°C in the air, followed by being vacuum-dried for 10 hours at 40°C to prepare a stack. The prepared stack was cold roll pressed to planarize a surface of the stack to manufacture a negative electrode with a structure of a coating layer and a negative electrode current collector. A thickness of the coating layer was about 15 µm. An area of the coating layer was the same as that of the negative electrode current collector.

### Solid Electrolyte Layer:

A mixture was prepared by adding 1.5 parts by weight of an acrylate-based binder to 98.5 parts by weight of the second solid electrolyte prepared according to Preparation 2. A slurry was prepared by adding octyl acetate to the prepared mixture while agitating the mixture. A bar coater was used to coat the prepared slurry on a non-woven fabric of 15 µm in thickness lying on a polyethyleneterephthalate (PET) substrate of 75 µm in thickness, and the coated slurry was dried for 10 minutes at 80°C in the air to prepare a stack. The prepared stack was vacuum-dried for 2 hours at 80°C to manufacture a solid electrolyte layer.

### Assembly of All-Solid-State Battery:

The solid electrolyte layer was disposed on the negative electrode, and the positive electrode was placed on the solid electrolyte layer. The prepared stack was plate-pressed for 30 minutes under a pressure of 500 MPa at a temperature of 85°C. The solid electrolyte layer was sintered through the pressing treatment to improve battery characteristics. A thickness of the sintered solid electrolyte layer was about 45 µm.

The pressed stack was placed into a pouch, and vacuum-sealed to fabricate an all-solid-state battery. A portion of the positive electrode current collector and a portion of the negative electrode current collector were extended outside the sealed battery to be used as a positive electrode terminal and a negative electrode terminal.

### Embodiment 1-2: Fabrication of All-Solid-State Battery

An all-solid-state battery was fabricated in the same method as in Embodiment 1-1, with a difference that the positive electrode active material layer was manufactured to have a thickness of about 150 µm.

### Embodiment 1-3: Fabrication of All-Solid-State Battery

An all-solid-state battery was fabricated in the same method as in Embodiment 1-1, with a difference that the positive electrode active material layer was manufactured to have a thickness of about 200 µm.

### Comparative 1-1: Fabrication of All-Solid-State Battery

The third solid electrolyte of Preparation 3 was used as a solid electrolyte particle of the positive electrode, and carbon black was added as a separate conductive material. Except as discussed above, an all-solid-state battery was fabricated in the same method as in Embodiment 1-1.

The positive electrode active material, the third solid electrolyte, the conductive material, and the binder were mixed in a weight ratio of 80:18:1:1.

A thickness of the positive electrode active material layer was about 80 µm.

### Comparative 1-2: Fabrication of All-Solid-State Battery

An all-solid-state battery was fabricated in the same method as in Comparative 1-1, with a difference that the positive electrode active material layer was manufactured to have a thickness of about 150 µm.

### Comparative 1-3: Fabrication of All-Solid-State Battery

An all-solid-state battery was fabricated in the same method as in Comparative 1-1, with a difference that the positive electrode active material layer was manufactured to have a thickness of about 200 µm.

### Evaluation 1: Electrode Pellet Density

Positive electrode pellet densities of the all-solid-state batteries according to the examples and the comparative examples were measured. The results are listed in Table 1 below.

**Table 1:**

| | Pellet density (g/cm³) |
|---|---|
| Embodiment 1-1 | 2.98 |
| Embodiment 1-2 | 2.81 |
| Embodiment 1-3 | 2.77 |
| Comparative 1-1 | 2.83 |
| Comparative 1-2 | 2.64 |
| Comparative 1-3 | 2.59 |

Referring to the evaluation results, it may be observed that the pellet density is greater in the positive electrode mixture layer according to the examples of the present disclosure than in the positive electrode mixture layer according to the comparative examples. In particular, in the comparative examples, an increase in thickness of the positive electrode active material layer causes a reduction in pellet density.

### Evaluation 2: Battery Lifetime Characteristics

Capacity retention rates and resistance characteristics of the positive electrode mixture layers were evaluated as characteristics of the all-solid-state batteries according to the examples and the comparative examples.

Each of the all-solid-state batteries according to the examples and the comparative examples was charged at 25°C with a constant current of 0.1 C up to a maximum voltage of 4.25 V, then charged at a constant voltage up to 0.05 C, followed by being discharged at 0.1 C up to a cutoff voltage of 2.5 V to perform an initial charge-discharge cycle.

Afterwards, at a temperature of 25°C, the capacity retention rate was evaluated by repeating 100 times the charge at 0.1 C and the discharge at 0.1 C. The capacity retention rate indicates the comparison of an initial capacity of the battery with a capacity after repetition of the charge-discharge cycles.

A 4-point probe method was performed to measure the resistance. The results of the resistance measurements are listed in Table 2 below.

**Table 2:**

| | Initial resistance (mΩ/cm²) | Capacity retention rate (%) |
|---|---|---|
| Embodiment 1-1 | 10 | 90% |
| Embodiment 1-2 | 12 | 87% |
| Embodiment 1-3 | 15 | 86% |
| Comparative 1-1 | 12 | 87% |
| Comparative 1-2 | 18 | 82% |
| Comparative 1-3 | 25 | 80% |

Referring to the evaluation results, it may be observed that the capacity retention rate is greater in the all-solid-batteries according to the examples than in the all-solid-batteries according to the comparative examples. In addition, referring to the resistance measurement results, it may be ascertained that, as a thickness of the positive electrode active material layer increases, the comparative examples show a rapid resistance increase, whereas the positive electrodes according to the examples exhibit a relatively low rate of resistance increase. This conclusion is believed to be that the solid electrolyte particles according to an example embodiment of the present disclosure have electronic conductivity and are dispersed in the positive electrode, thereby providing a more uniform positive electrode mixture layer.

According to an example embodiment of the present disclosure, a positive electrode for an all-solid-state battery may have improved electronic conductivity and reduced resistance, with the result that overall electrode performance may be improved. Additionally, a uniform electrode may be manufactured to reduce a deviation in battery performance and to enhance mass productivity of all-solid-state batteries.

## Claims

1. A positive electrode (100) for an all-solid-state battery (10), the positive electrode (100) comprising:
a cluster (CLU) that comprises an active material particle (CAC) and a plurality of solid electrolyte particles (SEP),
wherein the plurality of solid electrolyte particles (SEP) are in contact with the active material particle (CAC),
wherein at least one of the plurality of solid electrolyte particles (SEP) comprises a linear carbon-based conductive material (CDM) dispersed in the solid electrolyte particle,
wherein the active material particle (CAC) of the cluster (CLU) is electrically connected to a first solid electrolyte particle (SEP1) among the plurality of solid electrolyte particles (SEP), and
wherein a second solid electrolyte particle (SEP2) among the plurality of solid electrolyte particles (SEP) and the first solid electrolyte particle (SEP1) are in contact with each other to form an electrical path (ETP) through the linear carbon-based conductive material (CDM) of the first solid electrolyte particle (SEP1) and the linear carbon-based conductive material (CDM) of the second solid electrolyte particle (SEP2).

2. The positive electrode (100) of claim 1, wherein at least one of the plurality of solid electrolyte particles (SEP) comprises:
a matrix (EM) comprising a sulfide-based solid electrolyte; and
the linear carbon-based conductive material (CDM) in the matrix (EM).

3. The positive electrode (100) of claim 1 or 2, wherein at least one of the plurality of solid electrolyte particles (SEP) comprises:
a matrix (EM) comprising a sulfide-based solid electrolyte, wherein the sulfide-based solid electrolyte comprises an argyrodite-type sulfide-based solid electrolyte represented by Li_{7-a-c}MₐPS_{6-c}X_{c} (where 0 ≤ a ≤ 2 and 0 ≤ c ≤ 2),
wherein X comprises at least one of F, Br, and Cl, and
wherein M comprises at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), and bismuth (Bi).

4. The positive electrode (100) according to any one of claims 1 to 3, wherein the linear carbon-based conductive material (CDM) comprises at least one of carbon nanotube (CNT), carbon nanofiber (CNF), and vapor-grown carbon fiber (VGCF).

5. The positive electrode (100) according to any one of claims 1 to 4, wherein an average particle diameter of each of the plurality of solid electrolyte particles (SEP) is in a range of ≥ 0.5 µm to ≤ 2 µm.

6. An all-solid-state battery (10), comprising:
a positive electrode (100) that comprises a positive electrode current collector (110), and a positive electrode active material layer (120) on the positive electrode current collector (110);
a solid electrolyte layer (300); and
a negative electrode (200),
wherein the positive electrode active material layer (120) comprises a positive electrode active material particle (CAC) and a first solid electrolyte particle (SEP1),
wherein the first solid electrolyte particle (SEP1) comprises a linear carbon-based conductive material (CDM) dispersed in the first solid electrolyte particle (SEP1), and
wherein the linear carbon-based conductive material (CDM) is configured to penetrate the first solid electrolyte particle (SEP1) to form an electrical path (ETP) between a first location (LO1) and a second location (LO2) on a surface of the first solid electrolyte particle (SEP1).

7. The all-solid-state battery (10) of claim 6, wherein a thickness of the positive electrode active material layer (120) is in a range of ≥ 100 µm to ≤ 1,000 µm.

8. The all-solid-state battery (10) of claim 6 or 7, wherein the solid electrolyte layer (300) comprises a second solid electrolyte particle (SEP2),
wherein the second solid electrolyte particle (SEP2) excludes the linear carbon-based conductive material (CDM).

9. The all-solid-state battery (10) according to any one of claims 6 to 8, wherein the solid electrolyte layer (300) comprises a second solid electrolyte particle (SEP2), and wherein an average particle diameter of the first solid electrolyte particle (SEP1) is less than an average particle diameter of the second solid electrolyte particle (SEP2).

10. The all-solid-state battery (10) according to any one of claims 6 to 9, wherein an amount of the first solid electrolyte particle (SEP1) is in a range of ≥ 10 wt% to ≤ 30 wt% of a total weight of the positive electrode active material layer (120).

11. A method of manufacturing a solid electrolyte, the method comprising:
mixing an electrolyte precursor and a linear carbon-based conductive material (CDM) to obtain a mixture; and
thermally treating the mixture to prepare a solid electrolyte particle (SEP),
wherein the linear carbon-based conductive material (CDM) is configured to penetrate the solid electrolyte particle (SEP) to form an electrical path (ETP) between a first location (LO1) and a second location (LO2) on a surface of the solid electrolyte particle (SEP).

12. The method of claim 11, wherein mixing the electrolyte precursor and the linear carbon-based conductive material (CDM) is performed via a ball milling process.

13. The method of claim 11 or 12, wherein the electrolyte precursor comprises at least one of a sulfur precursor, a phosphorus precursor, and a halide precursor.

14. The method according to any one of claims 11 to 13, wherein thermally treating the mixture is performed at a temperature in a range of ≥ 100°C to ≤ 800°C.

15. The method according to any one of claims 11 to 14, wherein an amount of the linear carbon-based conductive material (CDM) is in a range of ≥ 1 wt% to ≤ 5 wt% relative to a total weight of the mixture.
